Europäisches Patentamt

European Patent Office

Office européen des brevets

(19)

(11) Veröffentlichungsnummer: **0 179 226**
**A2**

(12) # EUROPÄISCHE PATENTANMELDUNG

(21) Anmeldenummer: 85110554.4

(22) Anmeldetag: 22.08.85

(51) Int. Cl.⁴: **F 16 H 57/02**
F 16 H 1/22, B 30 B 11/24

(30) Priorität: 28.08.84 DE 3431547

(43) Veröffentlichungstag der Anmeldung:
30.04.86 Patentblatt 86/18

(84) Benannte Vertragsstaaten:
AT BE CH DE FR GB IT LI LU NL SE

(71) Anmelder: Blach, Josef A.
Wilhelmstrasse 24
D-7144 Asperg(DE)

(72) Erfinder: Blach, Josef A.
Wilhelmstrasse 24
D-7144 Asperg(DE)

(74) Vertreter: Hoeger, Stellrecht & Partner
Uhlandstrasse 14c
D-7000 Stuttgart 1(DE)

(54) Verzweigungsgetriebegehäuse.

(57) Um Verzweigungsgetrieb für Doppelschneckenmaschinen, mit Getriebeelementen, die alle parallel zueinander angeordnete Drehachsen besitzen, und mit einem in Richtung der Drehachsen durch eine erste und eine zweite senkrecht zu diesen stehende Trennebene in drei Abschnitte unterteilten Gehäuse, dessen erster und dritter Abschnitt die Zahnräder aufnehem und mehrere Gehäuseteile aufweisen, wobei Stossflächen der Gehäuseteile mindestens eine zu den Drehachsen parallele und durch mindestens eine der Drehachsen hindurch verlaufende Trennebene definieren, mit unterschiedlichen Schneckenwellenabständen kostengünstig herstellen zu können, wird vorgeschlagen, dass der erste Abschnitt und der dritte Abschnitt mit Ausnahme ihres Bohrungsbildes identisch ausgebildet sind und jeweils eine dritte Trennebene bzw. vierte Trennebene besitzen, die durch die Drehachse des Kuppelelements oder die Drehachsen der Kuppelelemente und senkrecht zu einer durch die beiden Drehachsen der Schneckenwellen festgelegten Spiegelebene verläuft.

Fig.1

HOEGER, STELLRECHT & PARTNER **0179226**

PATENTANWÄLTE

UHLANDSTRASSE 14 c · D 7000 STUTTGART 1

A 46 240 b  Anmelder: J.A. Blach
26.Juli 1984  Wilhelmstrasse 24
x-35  7144 Asperg


B e s c h r e i b u n g


Verzweigungsgetriebegehäuse


Die Erfindung betrifft ein Verzweigungsgetriebe für Doppelschneckenmaschinen mit einer von einer Antriebswelle unmittelbar angetriebenen ersten Schneckenwelle und einer
von der Antriebswelle über Zahnräder und mindestens ein
Kuppelelement angetriebenen zweiten Schneckenwelle, wobei alle Getriebeelemente parallel zueinander angeordnete
Drehachsen besitzen, und mit einem in Richtung der Drehachsen durch eine erste und eine zweite senkrecht zu diesen stehende Trennebene in drei Abschnitte unterteilten
Gehäuse, dessen erster und dritter Abschnitt die Zahnräder aufnehmen und mehrere Gehäuseteile aufweisen, wobei
Stossflächen der Gehäuseteile mindestens eine zu den Drehachsen parallel und durch mindestens eine der Drehachsen
hindurch verlaufende Trennebene definieren.

Insbesondere betrifft die Erfindung ein derartiges Getriebe
für Doppelschneckenmaschinen mit sich gleichsinnig drehenden und ineinandergreifenden Schnecken. Solche Doppelschneckenmaschinen finden z.B. beim Verarbeiten von
Kunststoffen, beim Mischen von Materialien oder beim Kne-

0179226

A 46 240 b
26.Juli 1984
x-35

ten von plastischen oder teigförmigen Materialien Verwendung.

Die Wirtschaftlichkeit einer derartigen Maschine hängt jedoch davon ab, inwieweit sie den unterschiedlichen Einsatzbedingungen angepasst werden kann. Z.B. ist es beim Einsatz einer derartigen Doppelschneckenmaschine als Extruder für technische Kunststoffe entscheidend, dass die Maschine dem für den jeweiligen Kunststoff spezifischen Energiebedarf, der erforderlichen Verweildauer des Kunststoffes im Extruder, dem optimalen Füllgrad in den verschiedenen Verarbeitungszonen, dem erforderlichen Schergefälle und nicht zuletzt dem optimalen und kostengünstigsten Durchsatz angepasst werden kann.

Aus diesen Anforderungen resultiert, dass neben Maschinenlänge und Drehzahl auch Schneckenaussendurchmesser und Gangtiefe variierbar sein sollten, d.h. jedoch, dass der Abstand der nebeneinanderliegenden Schneckenwellen veränderbar sein sollte.

Bei den bisher bekannten Getrieben, z.B. dem Getriebe gemäss der DE-AS 28 56 068, wurden die Gehäuse aus mehreren Gehäuseteilen zusammengesetzt, deren Trennebenen parallel zu einer durch die Drehachsen der beiden Schneckenwellen definierten Ebene liegen und dabei durch mindestens eine der Drehachsen hindurch verlaufen. In dem Ausführungsbeispiel gemäss der DE-AS 28 56 068 zeigt das Gehäuse in Fig. 2 drei Trennebenen, wobei die erste durch die Drehachse des unteren Kuppelelements, die zweite durch die bei-

0179226

A 46 240 b
26.Juli 1984
x-35

den Drehachsen der Schneckenwellen sowie einer Nebenwelle
und die dritte durch die Drehachse des oberen Kuppelelements
verläuft.

Eine Änderung des Abstands der beiden Schneckenwellen
hat, wenn man von einer Änderung der Grösse der Getriebezahnräder absieht, die in dem erforderlichen Masse auch
nicht möglich wäre, zur Folge, dass ausser den Abständen
der Drehachsen der Schneckenwellen und der Nebenwelle sich
die Abstände zwischen den Drehachsen der Kuppelelemente
und den Drehachsen der Nebenwelle sowie der von den Kuppelelementen angetriebenen Schneckenwellen ändern. Da jedoch
sämtliche Drehachsen in einer der Trennebenen liegen, hat
somit die Variation des Abstands der Drehachsen der Schnekkenwellen auch eine Parallelverschiebung der Trennebenen des
Getriebegehäuses zur Folge. Das heisst jedoch, dass aufgrund
der Änderungen in den Abständen zwischen den Trennebenen
einige Gehäuseteile nicht mehr verwendbar sind und neu konstruiert und gefertigt werden müssen.

Dies zeigt, dass eine Anpassung dieser Verzweigungsgetriebe
von Doppelschneckenmaschinen an unterschiedliche Einsatzanforderungen nur mit erheblichem finanziellem Aufwand
möglich ist, da für unterschiedliche Abstände der Schneckenwellen auch unterschiedliche Getriebegehäuse gebaut werden
müssen.

Es ist daher Aufgabe der Erfindung, ein Verzweigungsgetriebe für Doppelschneckenmaschinen der gattungsgemässen Art

A 46 240 b
26.Juli 1984
x-35

derart zu verbessern, dass eine kostengünstige Herstellung
von Verzweigungsgetrieben mit unterschiedlichem Abstand
der Schneckenwellen möglich ist.

Diese Aufgabe wird bei einem Verzweigungsgetriebe für
Doppelschneckenmaschinen der eingangs beschriebenen Art
erfindungsgemäss dadurch gelöst, dass der erste und der
dritte Abschnitt mit Ausnahme ihres Bohrungsbildes identisch ausgebildet sind und jeweils eine dritte bzw. eine
vierte Trennebene besitzen, die durch die Drehachse des
Kuppelelements oder die Drehachsen der Kuppelelemente
und senkrecht zu einer durch die beiden Drehachsen der
Schneckenwellen festgelegten Spiegelebene verläuft.

Der entscheidende Vorteil dieser erfindungsgemässen Lösung
besteht darin, dass die die Zahnräder aufnehmenden Abschnitte nur noch eine Trennebene besitzen, so dass eine
Variation des Abstandes der Drehachsen der beiden Schneckenwellen, die gleichzeitig zu einer Variation des Abstandes
zwischen den Drehachsen der Schneckenwellen und denen der
Kuppelemente führt, problemlos erfolgen kann, da die
Drehachsen des Kuppelelements oder der Kuppelelemente nur
in der Trennebene verschoben werden und Aufnahmen für die
Schneckenwellen und die Antriebswellen entsprechend der
Position der Drehachsen der Kuppelelemente gebohrt werden, so dass nur eine Veränderung des Bohrungsbildes für
die jeweiligen Abschnitte erforderlich ist und die Lage

A 46 240 b
26.Juli 1984
x-35

der einzigen Trennebene nicht verändert werden muss. Das
heisst, für sämtliche Schneckenwellenabstände kann ein
und dasselbe Getriebegehäuse Verwendung finden, so dass
daher eine kostengünstige Serienherstellung von Getriebegehäusen sowie den entsprechenden Getriebeelementen möglich wird, die dann durch ausschliessliche Variation des
Bohrungsbildes an verschiedene Anwendungen angepasst werden können.

Variation des Bohrungsbildes bedeutet in diesem Zusammenhang jedoch nur, dass ausser den im ersten und zweiten Abschnitt identischen Bohrungen für die Kuppelelemente im
dritten Abschnitt zwei Bohrungen für zwei Schneckenwellen
erforderlich sind und dagegen im ersten Abschnitt nur eine
Bohrung für die Antriebswelle, allerdings mit einem grösseren Durchmesser als die obigen, notwendig ist. Die Lage
der Bohrungen relativ zueinander ist für jeden Schneckenwellenabstand konstant, so dass die Bearbeitung des ersten
und dritten Abschnitts des Gehäuses fertigungstechnisch
rationell in derselben Aufspannung erfolgen kann.

0179226

A 46 240 b
26.Juli 1984
x-35


Ein weiterer Vorteil des erfindungsgemässen Getriebes ist
die Identität zwischen dem ersten und dem dritten Abschnitt,
so dass dadurch weitere Einsparungen bei den Herstellungskosten möglich sind.

Bei der bisher erläuterten Ausführungsform der Erfindung
wurde nicht festgelegt, wie die Gehäuseteile des ersten
und dritten Abschnitts ausgebildet sind, so dass die beiden Gehäuseteile unterschiedlich sein können. Eine weitere
Reduktion der Herstellungskosten ergibt sich daher, wenn
die Gehäuseteile des ersten und dritten Abschnitts identische Halbschalen sind, wobei sich die Bohrungsbilder des
ersten und dritten Abschnitts noch unterscheiden können.

Beim Betrieb der Doppelschneckenmaschinen, insbesondere
als Schneckenwellenextruder, treten in axialer Richtung
der Schneckenwellen sehr hohe Kräfte auf, die durch
Axialdrucklager in dem Verzweigungsgetriebehäuse aufgefangen werden müssen. Diese Axialdrucklager sind entsprechend der maximal zulässigen Axialdruckkraft unterschiedlich gross und auch unterschiedlich teuer. Da erfindungsgemäss eine Standardisierung eines für eine Vielzahl
von Einsatzanforderungen verwendbaren Getriebegehäuses
beabsichtigt ist, müsste ein solches Getriebegehäuse mit Axialdrucklagern versehen sein, die für die grösstmöglichen
axialen Druckkräfte ausgelegt sind. Damit es aus Standardisierungsgründen nicht erforderlich ist, bei einer
Vielzahl von Anwendungen des erfindungsgemässen Getriebegehäuses unnötig überdimensionierte Axialdrucklager ein-

A 46 240 b
26.Juli 1984
x-35

zubauen, ist vorgesehen, dass der zweite Abschnitt Axialdrucklager für beide Schneckenwellen aufnimmt. Damit besteht die Möglichkeit, unabhängig von den standardisierten
ersten und dritten Gehäuseabschnitten entsprechend der unterschiedlichen Grössen der Axialdrucklager unterschiedliche zweite Abschnitte des Getriebegehäuses zu fertigen
und somit trotz Verwendung möglichst vieler standardisierter Teile die Herstellungskosten des erfindungsgemässen
Verzweigungsgetriebes möglichst niedrig zu halten.

Eine weitere Senkung der Herstellungskosten ist möglich,
wenn der zweite Abschnitt ein einstückiges Teil ist, das
zur Anpassung an die unterschiedlichen Abstände der Drehachsen der Schneckenwellen nur mit unterschiedlichen Bohrungen zu versehen ist.

Die bisherigen Ausführungsformen unterlagen keinen Beschränkungen hinsichtlich der Anordnung der dritten Trennebene im ersten Abschnitt und der vierten Trennebene im
dritten Abschnitt relativ zueinander. Z.B. dürfen die
dritte und die vierte Trennebene bei Verwendung eines einzigen Kuppelelements mit einer einzigen Drehachse nicht
gegeneinander versetzt sein, so dass es sich bei den beiden Trennebenen um identische Ebenen handelt. Für die Anordnung der einzelnen Getriebeelemente, vor allem bei der
Anordnung von starken Kräften ausgesetzten Lagern kann es
jedoch auch von Vorteil sein, wenn die dritte und die
vierte Trennebene gegeneinander versetzt sind. In diesem

A 46 240 b
26.Juli 1984
x-35

Falle sind dann jedoch mehrere Kuppelelemente erforderlich oder es muss bei Verwendung eines einzigen Kuppelelements ein solches mit zwei gegeneinander versetzten
Drehachsen verwendet werden.

Die für die Erfindung vorteilhafteste Ausführungsform
eines solchen Kuppelelements ist, wenn das Kuppelelement
ein erstes, in dem ersten Abschnitt angetriebenes Wellenstück, und ein zweites achsparallel zum ersten, jedoch
gegenüber diesem versetzt angeordnetes Wellenstück, zum
Antrieb der zweiten Schneckenwelle in dem dritten Abschnitt, sowie eine diese beiden Wellenstücke verbindende
Parallelkurbelgetriebekupplung umfasst, die einen stufenlosen
Versatz der beiden Wellenstücke innerhalb eines zulässigen
Bereichs erlaubt. Ein derartiges Kuppelelement ist
zur Lösung der erfindungsgemässen Aufgabe besonders geeignet,
da es die Möglichkeit schafft, den dritten Abschnitt relativ
zum ersten Abschnitt in gewissen Grenzen stufenlos zu versetzen, wobei in diesem Fall ausschliesslich die Bohrungen
für die erste, unmittelbar angetriebene Schneckenwelle
in dem dritten Abschnitt versetzt auszuführen oder durch
ein Langloch zu ersetzen sind. Die Lage aller übrigen
Bohrungen in dem ersten und dritten Abschnitt bleibt unabhängig von dem Abstand der Schneckenwellen erhalten. Damit
muss nur noch der zweite Abschnitt, vor allem hinsichtlich
der Aufnahmen für die beiden Axialdrucklager, den unterschiedlichen Schneckenwellenabständen angepasst werden.

A 46 240 b
26.Juli 1984
x-35

Bei allen bisher beschriebenen Ausführungsbeispielen ist
es. vor allem bei der Übertragung grosser Drehmomente von
Vorteil, wenn die Gehäuseteile Lagerungen für zwei symmetrisch zur Spiegelebene angeordnete Kuppelelemente aufweisen, so dass die Möglichkeit besteht, das Drehmoment
auf die zweite, nicht unmittelbar angetriebene Schneckenwelle durch zwei Kuppelelemente zu übertragen, wodurch
eine wesentliche Verringerung des Lagerverschleisses erreichbar ist.

Vor allem bei den Ausführungsbeispielen mit gegeneinander
versetzten Trennebenen bringt die Verwendung zweier Kuppelelemente dann grosse Vorteile, wenn die Drehachsen der
Kuppelelemente und der zweiten Schneckenwelle oder der Antriebswelle in der Trennebene des jeweiligen Abschnitts
liegen. Dies ist dadurch begründet, dass bei in einer Ebene
liegenden Drehachsen der Schneckenwelle oder der Antriebswelle und der mit diesen in Verbindung stehenden und symmetrisch zur Spiegelebene angeordneten Kuppelelemente die
Lager der jeweiligen in der Mitte liegenden Schneckenwelle
oder Antriebswelle keine Kräfte senkrecht zu der genannten
Ebene erfahren. Dies ist vor allem bei der Übertragung grosser Drehmomente entscheidend, da dadurch eine schwächere
Auslegung der ohnehin in ihrer räumlichen Ausdehnung durch
die erste Schneckenwelle oder die Lager der seitlichen Zahnräder räumlich begrenzten Lager der mittleren Welle möglich ist.

Weitere Merkmale und Vorteile der Erfindung ergeben sich
aus der folgenden Beschreibung sowie der beigefügten
zeichnerischen Darstellung einiger Ausführungsformen der
Erfindung. In der Zeichnung zeigen:

A 46 240 b
26.Juli 1984
x-35

Fig. 1 einen ersten Längsschnitt eines
ersten Ausführungsbeispiels
(Schnitt längs Linie 1-1 in Fig.2);

Fig. 2 eine erste Frontansicht des ersten Ausführungsbeispiels;

Fig. 3 einen zweiten Längsschnitt des ersten
Ausführungsbeispiels (Schnitt längs
Linie 3-3 in Fig. 4);

Fig. 4 eine zweite Frontansicht des ersten Ausführungsbeispiels;

Fig. 5 einen Längsschnitt eines zweiten Ausführungsbeispiels (Schnitt längs Linie 5-5 in Fig. 6);

Fig. 6 eine Frontansicht eines zweiten Ausführungsbeispiels;

Fig. 7 einen ersten Längsschnitt eines dritten
Ausführungsbeispiels (Schnitt längs
Linie 7-7 in Fig. 8);

Fig. 8 eine Frontansicht des dritten Ausführungsbeispiels;

Fig. 9 einen zweiten Längsschnitt längs Linie 9-9

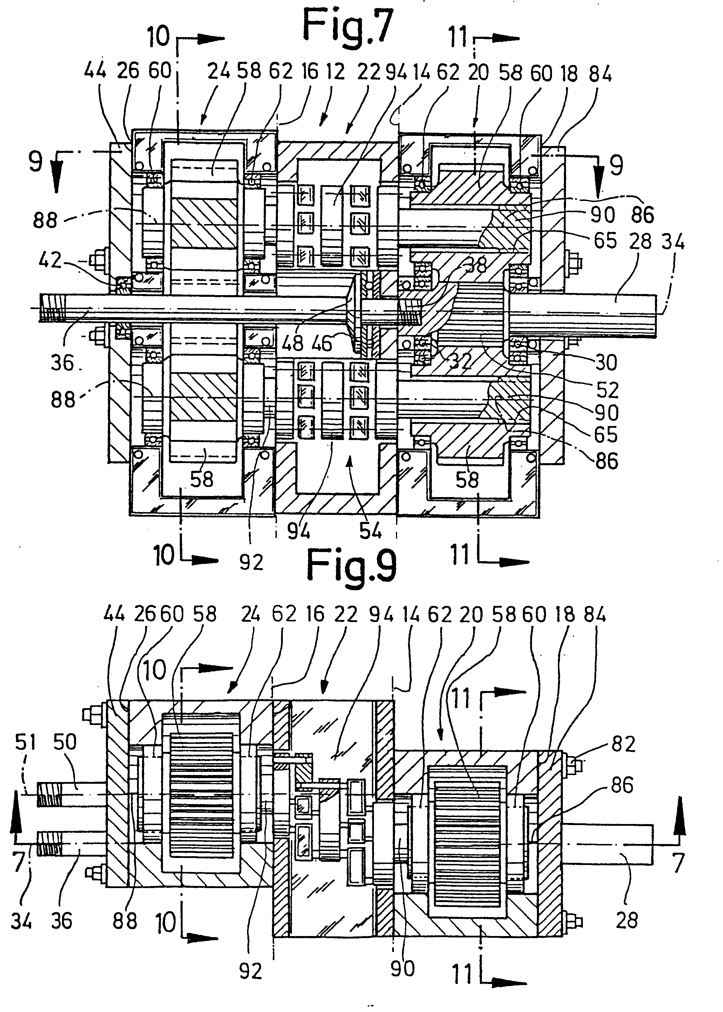

in Fig. 7;

0179226

A 46 240 b
26.Juli 1984
x-35

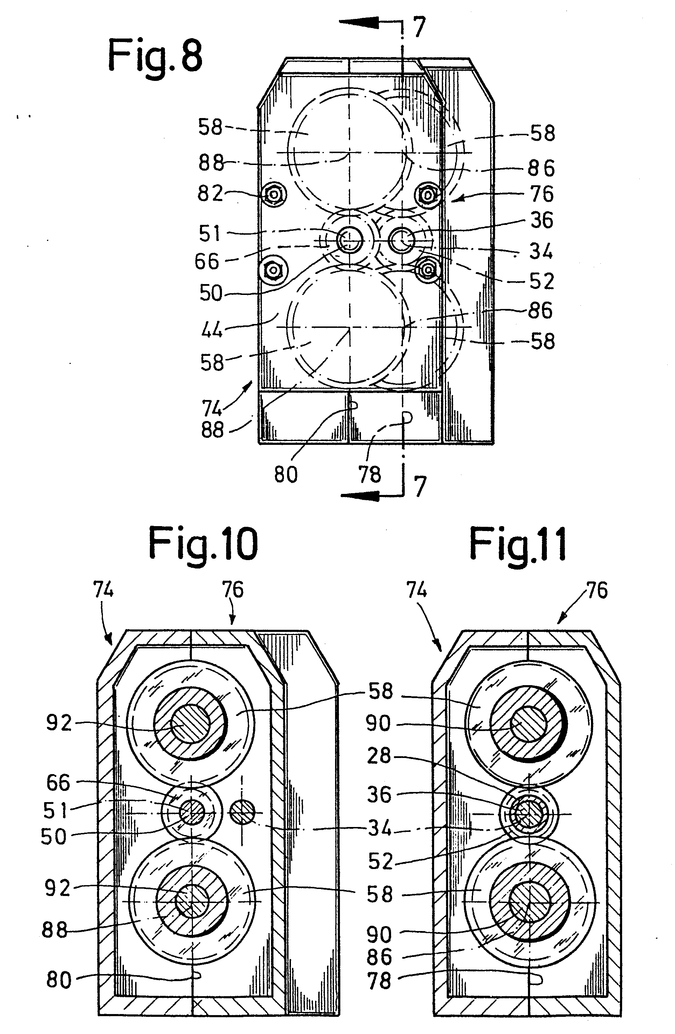

Fig. 10 einen Schnitt längs Linie 10-10 in Fig. 7 und

Fig. 11 einen Schnitt längs Linie 11-11 in Fig. 7.

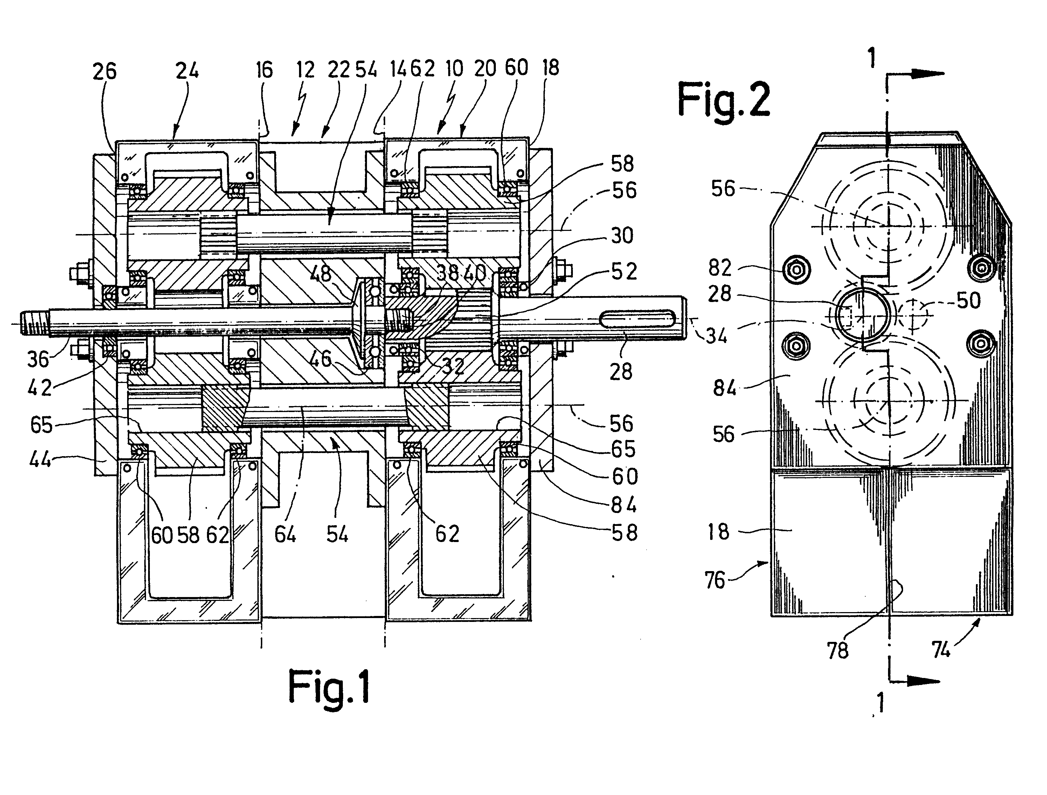

Fig. 1 zeigt ein als Ganzes mit 10 bezeichnetes Verzweigungsgetriebe mit einem Gehäuse 12, das durch eine erste Trennebene 14 und eine zweite, parallel zu dieser verlaufende Trennebene 16 in drei Abschnitte unterteilt ist, wobei sich ein erster Abschnitt 20 von einer Stirnseite 18 des Gehäuses 12 zu der ersten Trennebene 14, ein zweiter Abschnitt 22 von der ersten Trennebene 14 zu der zweiten Trennebene 16 und ein dritter Abschnitt 24 von der zweiten Trennebene 16 zu einer der Stirnseite 18 entgegengesetzten Stirnseite 26 erstreckt. Der erste Abschnitt 20 und der dritte Abschnitt 24 des Gehäuses sind dabei im wesentlichen identisch ausgebildet.

Eine senkrecht zu den Trennebenen 14 und 16 verlaufende Antriebswelle 28 erstreckt sich von der Stirnseite 18 in ein Inneres des ersten Abschnitts 20 und ist in diesem mittels zweier im Abstand zueinander angeordneter Radiallager 30 und 32 drehbar gelagert. Eine koaxial zu einer Drehachse 34 der Antriebswelle 28 verlaufende erste Schneckenwelle 36 steckt mit einem Ende 38 in einer Bohrung 40 der Antriebswelle 28 und ist mit dieser über eine Keilverzahnung drehfest verbunden. Die erste Schneckenwelle 36 erstreckt sich von der in dem ersten Abschnitt 20 gelagerten Antriebswelle 28 durch den zweiten Abschnitt 22 und den dritten Abschnitt 24 hindurch, steht über die

A 46 240 b
26.Juli 1984
x-35

Stirnseite 26 des Gehäuses 12 über und trägt an ihrem überstehenden Teil einen hier zeichnerisch nicht dargestellten Schneckenabschnitt.

Die Lagerung der ersten Schneckenwelle 36 erfolgt, wie bereits beschrieben, zum einen durch das in der Bohrung 40 der Antriebswelle 28 gehaltene Ende 38 und zum anderen durch ein Radiallager 42, das in einer auf der Stirnseite 26 anliegenden Frontplatte 44 gehalten ist. Zusätzlich zu einer radialen Lagerung der ersten Schneckenwelle 36 ist noch eine axiale Lagerung erforderlich, die im Bereich des Schneckenabschnitts entstehende Axialdruckkräfte abfängt. Diese erfolgt im zweiten Abschnitt 22 durch ein Axialdrucklager 46, auf dem sich die erste Schneckenwelle 36 mittels eines an diese angeformten Ringbundes 48 abstützt. Das Axialdrucklager 46 kann sich entweder, wie hier in der Zeichnung dargestellt, in der ersten Trennebene 14 auf dem ersten Abschnitt 20 abstützen oder auch in dem zweiten Abschnitt 22 gehalten sein.

Zum Antrieb einer zweiten Schneckenwelle 50, die in Fig. 1 nicht sichtbar ist, da sie achsparallel zur ersten Schneckenwelle 36 verläuft und genau hinter dieser liegt, besitzt die Antriebswelle 28 ein Antriebszahnrad 52. Dieses wirkt seinerseits auf zwei völlig identisch ausgebildete Kuppelelemente 54 mit Drehachsen 56, die parallel zur Drehachse 34 ausgerichtet sind. Die beiden Kuppelelemente 54 liegen beiderseits der Drehachse 34 der Antriebswelle 28, wobei die beiden Drehachsen 56 der Kuppelelemente 54 eine Ebene definieren, die, wie Fig. 2 zeigt, einen Abstand zur Drehachse 34 der Antriebswelle 28 aufweist, so dass die bei-

A 46 240 b
26.Juli 1984
x-35

den Drehachsen 56 und die Drehachse 34 nicht in einer Ebene
liegen.

Die Kuppelelemente 54 erstrecken sich längs ihrer Drehachsen
56 durch alle drei Abschnitte 20, 22, 24 des Gehäuses 12,
wobei sie jeweils in dem ersten Abschnitt 20 und dem dritten
Abschnitt 24 ein als Hohlkörper ausgebildetes Zahnrad 58
aufweisen, das durch zwei im Abstand zueinander angeordnete
Radiallager 60, 62 in dem jeweiligen Abschnitt 20, 24 drehbar gelagert ist. Die beiden Zahnräder 58 eines Kuppelelements 54 sind über eine Torsionswelle 64 verbunden, die
jeweils in eine innere Bohrung 65 der Zahnräder 58 hineinragt und dort mit dem jeweiligen Zahnrad 58 über eine Keilverzahnung in Eingriff ist. Weitere Einzelheiten bezüglich
der Kuppelelemente 54 können der DE-PS 3 201 952 entnommen
werden.

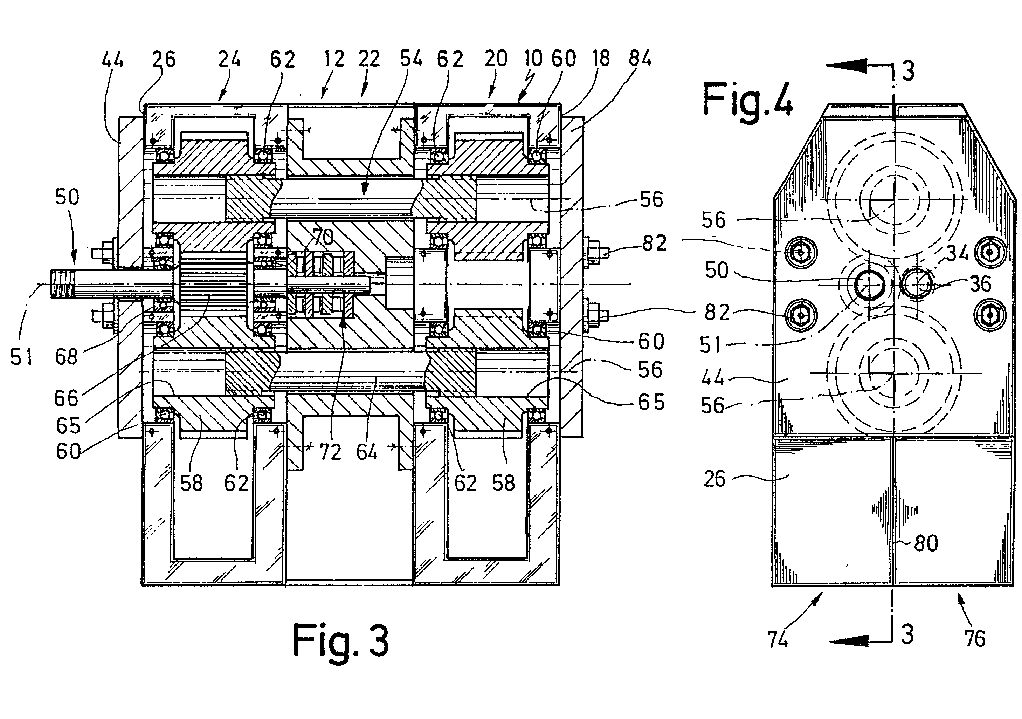

Das im ersten Abschnitt 20 gelagerte Zahnrad 58 der Kuppelelemente 54 steht dort mit dem Antriebszahnrad 52 in Eingriff und ist durch dieses antreibbar. Die dadurch gleichfalls angetriebenen Zahnräder 58 der Kuppelelemente 54 im
dritten Abschnitt 24 greifen dort in ein in Fig. 3 dargestelltes Zahnrad 66 der zweiten Schneckenwelle 50 ein und
treiben dieses gleichsinnig wie die erste Schneckenwelle 36
und mit gleicher Drehzahl an, da das Zahnrad 66 mit dem Antriebszahnrad 52 der Antriebswelle 28 identisch ist. Bei dem
Schnitt in Fig. 3 ist die erste Schneckenwelle 36 entfernt,
so dass die dazu achsparallele zweite Schneckenwelle 50
mit ihrer Drehachse 51 sichtbar ist. Diese erstreckt sich
von der Stirnseite 26 in das Innere des dritten Abschnitts
24, trägt dort das bereits beschriebene Zahnrad 66 und ist

A 46 240 b
26.Juli 1984
x-35

durch zwei Radiallager 68 und 70 drehbar gelagert. Wie
bereits bei der ersten Schneckenwelle 36 beschrieben,
treten auch hier axiale Druckkräfte auf, die durch Axialdrucklager abgefangen werden müssen. Dazu erstreckt sich
die zweite Schneckenwelle 50 durch den dritten Abschnitt
24 hindurch in den zweiten Abschnitt 22 und trägt dort
ein Axialdrucklager 72, das sich in dem zweiten Abschnitt
22 des Gehäuses abstützt.

Die Drehachse 51 der zweiten Schneckenwelle 50 sowie die
mit einer Drehachse der ersten Schneckenwelle 36 identische Drehachse 34 der Antriebswelle 28 liegen gemeinsam
in einer Ebene, die senkrecht auf der durch die Drehachsen
56 der beiden Kuppelelemente 54 definierten Ebene steht und
diese schneidet. Bezeichnet man die durch die Drehachsen
der ersten Schneckenwelle 36 und der zweiten Schneckenwelle
50 definierte Ebene als Spiegelebene, so sind die beiden
Kuppelelemente bezüglich dieser Ebene spiegelsymmetrisch
in dem Getriebe 10 angeordnet. Dies ist dadurch bedingt,
dass das Antriebszahnrad 52 und das Zahnrad 66 auf der
zweiten Schneckenwelle gleich gross sind, so dass ein Antrieb beider Zahnräder über identische Zahnräder 58 der
Kuppelelemente 54 nur bei einer derartigen Anordnung möglich
ist.

Damit ein Einbau der verschiedenen Lager und Zahnräder in
das Getriebe 12 und vor allem in den ersten Abschnitt 20
und den dritten Abschnitt 24 möglich ist, sind der erste
Abschnitt 20 und der dritte Abschnitt 24 des Gehäuses 12
in zwei Halbschalen 74 und 76 zerlegbar, deren Stossflächen

A 46 240 b
26.Juli 1984
x-35

im ersten Abschnitt 20 eine dritte Trennebene 78 und im
dritten Abschnitt 24 eine vierte Trennebene 80 definieren.
Die beiden Trennebenen 78 und 80 sind dabei so gelegt (Fig.
2 und 4), dass sie mit der durch die Drehachsen 56 der beiden Kuppelelemente 54 definierten Ebene zusammenfallen und
senkrecht auf der durch die Drehachsen der ersten und zweiten
Schneckenwelle definierten Spiegelebene stehen. Dies ist
dadurch bedingt, dass es für den Zusammenbau des Getriebes
günstiger ist, wenn in den ersten Abschnitt 20 und den dritten Abschnitt 24 eingearbeitete Lagersitze für die Lager 60
und 62 der Zahnräder 58 durch die jeweilige Trennebene 78,
80 teilbar sind, wohingegen ein Einbau der Zahnräder 52
und 66 sowie der entsprechenden Lager 30 und 32 sowie 68
und 70 auch ohne eine Teilung des Lagersitzes möglich ist.

Der einzige Unterschied zwischen dem aus den identischen
Halbschalen 74 und 76 zusammengesetzten ersten Abschnitt 20
und dem aus denselben Halbschalen 74, 76 zusammengesetzten
dritten Abschnitt 24 zeigt sich in deren Bohrungsbild. Auf
der Stirnseite 18 und einer dieser entgegengesetzten Seite
des ersten Abschnitts 20 ist nur eine Bohrung für die Antriebswelle 28 und die mit dieser in Verbindung stehende
erste Schneckenwelle 36 erforderlich (Fig. 2), wohingegen
in der Stirnseite 26 und der dieser entgegengesetzten Seite
des dritten Abschnitts 24 jeweils eine Bohrung für die
erste Schneckenwelle 36 und die zweite Schneckenwelle 50
(Fig. 4) notwendig sind. Erwähnenswert ist ausserdem, dass
die Bohrung für die Antriebswelle 28 grösser sein muss, da
diese einen grösseren Durchmesser als die Schneckenwellen
36, 50 hat. Zusätzlich zu den genannten Bohrungen sind zumindest auf den den Stirnseiten 18, 26

0179226

A 46 240 b
26.Juli 1984
x-35

entgegengesetzten Seiten des ersten Abschnitts 20 und des dritten Abschnitts 24 Bohrungen für die Torsionswellen 64 erforderlich. Diese Bohrungen ergeben jedoch ein für beide Abschnitte 20, 24 identisches Bohrungsbild. .

Der zweite Abschnitt 22 ist bevorzugterweise einstückig ausgebildet, wobei er Bohrungen für die Torsionswellen 64 und die beiden Schneckenwellen 36, 50 besitzt und zusätzlich mit Ausnehmungen zur Aufnahme der Axialdrucklager 46 und 72 versehen ist.

Eine Variation des Abstandes der Drehachsen 34, 51 der Schneckenwellen 36, 50 hat nun zur Folge, dass gleichzeitig die Abstände der Drehachsen 56 der Kuppelelemente 54 variieren. Zum Beispiel ergibt eine Vergrösserung des Abstandes der Drehachsen der Schneckenwellen 36, 50 bezüglich der durch die Drehachsen 56 der Kuppelelemente 54 definierten Ebene ein symmetrisches Auseinanderrücken der Drehachsen 34, 51 und gleichzeitig ein Zusammendrücken der Drehachsen 56 der Kuppelelemente 54 symmetrisch zu der durch die Drehachsen 34, 51 der Schneckenwellen 36, 50 definierten Spiegelebene. Aufgrund der erfindungsgemässen Lage der Trennebenen 78, 80 verbleiben die Drehachsen 56 in dieser Trennebene, so dass die Halbschalen 74, 76 weiterverwendbar sind und nur die Bohrungen oder Ausnehmungen für die Lagersitze und die einzelnen Wellen in ihren Abständen variieren.

Der Vorteil bei diesem Gehäuseaufbau äussert sich vor allem auch darin, dass beim Fräsen oder Bohren der Ausnehmungen bzw. Bohrungen in den Halbschalen 74, 76 jede Halbschale in derselben Aufspannung bearbeitet werden kann, da sich die Achsen für die einzelnen Bohrungen oder Ausnehmungen bei einem bestimmten vorgegebenen Schneckenwellenabstand nicht von Halb-

A 46 240 b
26.Juli 1984
x-35

0179226

schale zu Halbschale verschieben, sondern allenfalls, wie oben beschrieben, eine Bohrung entfallen kann oder eine Bohrung einen grösseren Durchmesser aufzuweisen hat. Die übrigen Vorteile wurden bereits in der vorstehenden Beschreibungseinleitung ausführlich erörtert.

Ein zusätzlicher Vorteil des beschriebenen Aufbaus ist noch darin zu sehen, dass alle Sollbruchstellen der Wellen 36, 64 in den zweiten Abschnitt 22 gelegt werden können, so dass bei Überlastung des Getriebes 10 nur der zweite Abschnitt 22 ausgetauscht werden muss.

Zur Entlastung des Gehäuses hinsichtlich der durch die Axialdrucklager 46 und 72 vom Gehäuse 12 aufzunehmenden axial gerichteten Druckkräfte, sind die drei Gehäuseabschnitte 20, 22 und 24 durch achsparallel zu den Schneckenwellen 36, 50 angeordnete Zuganker 82 verspannt, die zumindest den dritten Abschnitt und den zweiten Abschnitt durchgreifen, mit einem Ende an der Frontplatte 44 und mit dem anderen Ende in Wandflächen des ersten Abschnitts 20 verankert sind. Es besteht auch die Möglichkeit, dass die Zuganker 82 alle drei Abschnitte 20, 22 und 24 durchgreifen und wiederum mit einem Ende an der Frontplatte 44 sowie mit dem anderen Ende an einer dieser Frontplatte 44 gegenüberliegenden Frontplatte 84 gehalten sind. Der Vorteil dieser Zuganker 82 besteht darin, dass das Gehäuse 12 aus Gussteilen hergestellt werden kann, die im allgemeinen nicht auf Zug belastbar sind.

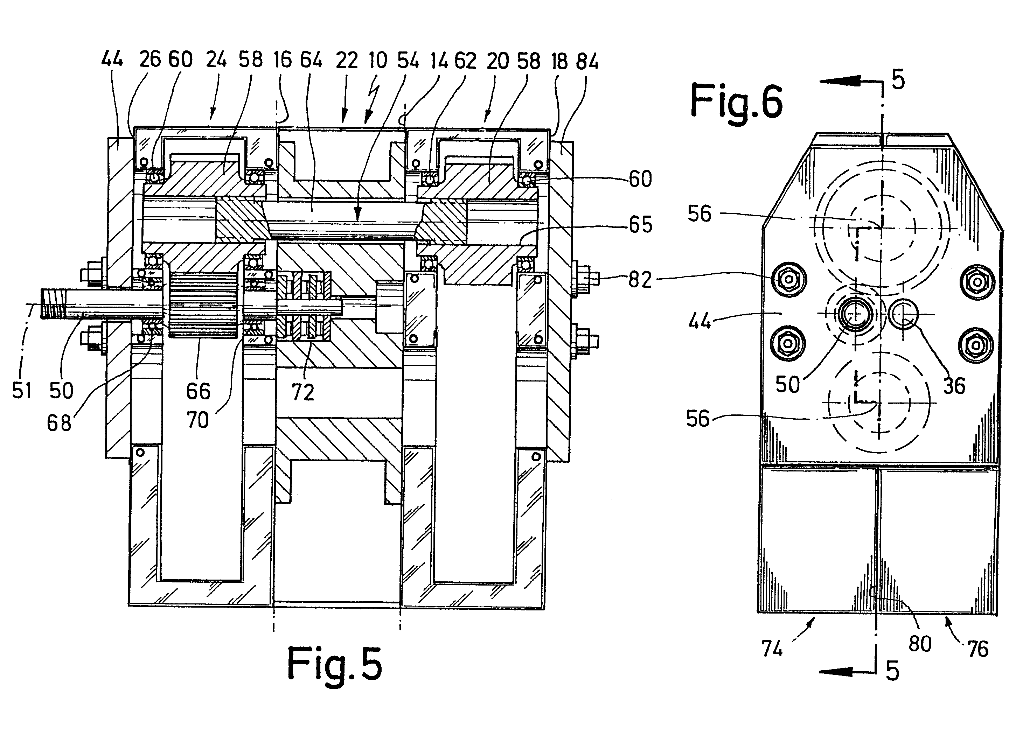

Das zweite Ausführungsbeispiel, dargestellt in den Fig. 5 und 6, stellt eine vereinfachte Version des ersten Ausführungsbeispiels dar, wobei der einzige Unterschied darin besteht, dass die zweite Schneckenwelle 50 nur über ein Kuppelelement 54 angetrieben wird. Alle mit dem ersten Ausführungsbeispiel identischen Teile sind mit denselben Bezugszeichen gekennzeichnet.

A 46 240 b
26.Juli 1984
x-35

Dieses zweite Ausführungsbeispiel ist vor allem bei
Verzweigungsgetrieben verwendbar, bei denen nur ungefähr
halb so grosse Drehmomente wie beim ersten Ausführungsbeispiel übertragen werden müssen.

Die Teile des dritten Ausführungsbeispiels (Fig. 7 bis 11)
sind, soweit es sich um identische Teile handelt, mit demselben Bezugszeichen bezeichnet. Das dritte Ausführungsbeispiel unterscheidet sich vor allem in der Ausgestaltung der Kuppelelemente 54, die keine einheitliche durchgehende Drehachse 56 mehr besitzen, sondern in dem ersten
Abschnitt 20 eine Drehachse 86 aufweisen, gegenüber welcher
eine Drehachse 88 desselben Kuppelelements 54 im dritten
Abschnitt 24 versetzt ist. Bei dieser Anordnung kann die
Verbindung der beiden Zahnräder 58 eines Kuppelelements
nicht mehr über die vorher beschriebene Torsionswelle 64
erfolgen.

Zur drehfesten Verbindung der beiden Zahnräder 58 eines
Kuppelelements 54 ist in jeder Bohrung  65 eines Zahnrades 58
ein entweder zur Drehachse 86 oder zur Drehachse 88
koaxiales Wellenstück 90 bzw. 92 gehalten, das mit seinem
jeweils dem gegenüberliegenden Zahnrad 58 zugewandten
Ende mit einer Parallelkurbelgetriebekupplung 94 der Firma
Schmidt (Schmidt-Kupplung) drehfest verbunden ist. Diese
Parallelkurbelgetriebekupplung 94 erlaubt einen stufenlosen Versatz der Drehachse 86 gegenüber der Drehachse 88
innerhalb eines durch die Konstruktion der Kurbelgetriebekupplung 94 bedingten zulässigen Arbeitsbereichs.

A 46 240 b
26.Juli 1984
x-35

Daraus ergeben sich für den Aufbau des dritten Ausführungs- .
beispiels folgende Konsequenzen. Da die Ausbildung und
Lagerung der Antriebswelle 28 sowie der ersten Schneckenwelle 36 mit dem ersten Ausführungsbeispiel identisch
sind, bleibt die Lage der Drehachse 34, die gleichzeitig
Drehachse der ersten Schneckenwelle 36 ist, bestehen und
auch bei allen Modifikationen des dritten Ausführungsbeispiels konstant. Im Gegensatz zu den ersten beiden Ausführungsbeispielen besteht nun die Möglichkeit, die Zahnräder 58  der beiden Kuppelelemente 54 im ersten Abschnitt
20 so anzuordnen, dass die Drehachsen 86 zusammen mit der
Drehachse 34 in einer Ebene liegen. Desgleichen liegen
die Drehachsen 88 im dritten Abschnitt 24 in einer Ebene
mit der Drehachse 51 der zweiten Schneckenwelle. Diese
Anordnung bietet den Vorteil, dass der Abtrieb durch das
Zahnrad 52 der Antriebswelle 28 vollkommen symmetrisch erfolgt, so dass auf die Lager der Antriebswelle keine senkrecht auf der durch die Drehachsen 86 der Kuppelelemente 54
definierten Ebene stehenden Kräfte wirken. Desgleichen erfolgt der Antrieb des Zahnrades 66 der zweiten Schneckenwelle 50 ebenfalls vollkommen symmetrisch, so dass auch
hier keine senkrecht auf der durch die Drehachsen 88 definierten Ebene stehenden Kräfte auftreten.

Ein weiterer Vorteil ist, dass bei diesem Ausführungsbeispiel die durch die Drehachsen 86 und 88 definierten Trennebenen 78 bzw. 80 zusätzlich auch noch durch die Drehachsen
der Antriebswelle 28 bzw. der zweiten Schneckenwelle 50
hindurchgehen, so dass ein Einbau der hierbei erforderlichen
Lager erleichtert wird.

A 46 240 b
26.Juli 1984
x-35

Die Halbschalen 74 und 76 des ersten Abschnitts 20 und
des dritten Abschnitts 24 sind ebenfalls bis auf das
Bohrungsbild identisch ausgebildet, wobei die bereits erläuterten Unterschiede beim Böhrungsbild, d.h. im dritten
Abschnitt zwei Bohrungen für die zwei Schneckenwellen 36,
50 und im ersten Abschnitt eine Bohrung für die Antriebswelle 28, auch hier zutreffend sind.

Der aus dem Versatz der beiden Wellenstücke 90, 92 resultierende Unterschied für den Gesamtaufbau des Gehäuses
12 zeigt sich darin, dass aufgrund des Versatzes der
Drehachsen 86 und 88 der Kuppelelemente 54 auch die dritte
Trennebene 78 des ersten Abschnitts 20 gegenüber der vierten
Trennebene 80 des dritten Abschnitts 24 parallel versetzt
ist, so dass die beiden Ebenen nicht mehr zusammenfallen,
sondern einen Abstand voneinander aufweisen. Dies hat zur
Folge, dass ebenfalls der dritte Abschnitt 24 als Ganzes
gegenüber dem ersten Abschnitt 20 versetzt ist.

Eine Variation des Abstandes der Drehachsen der ersten
Schneckenwelle 36 und der zweiten Schneckenwelle 50
ist bei diesem dritten Ausführungsbeispiel besonders einfach ausführbar. Im Gegensatz zum ersten Ausführungsbeispiel verändern sich bei dieser Ausführungsform die Lagen
der Drehachsen 86 und 88 der Kuppelelemente 54 bezüglich
der angetriebenen oder antreibenden Wellen nicht mehr.
So bleibt im ersten Abschnitt 20 die Lage der Drehachse
34 bezüglich der Drehachsen 36 konstant und im dritten
Abschnitt 24 die Lage der Drehachse 51 der zweiten Schneckenwelle bezüglich der Drehachsen 88 der Kuppelelemente 54

A 46 240 b
26.Juli 1984
x-35

ebenfalls. Als einziges ändert sich nur noch zwangsläufig
der Abstand der Drehachsen der Schneckenwellen 36, 50,
so dass die Bohrung für die erste Schneckenwelle 36 im
dritten Abschnitt entsprechend dem gewünschten Abstand
ausgeführt werden muss. Da, wie bereits oben beschrieben,
die Drehachse 34 auch Drehachse der ersten Schneckenwelle
36 ist und konstant bleibt, bedeutet eine Variation des
Abstands zwischen den Drehachsen der Schneckenwellen 36, 50,
dass der dritte Abschnitt 24 des Gehäuses als Ganzes gegenüber dem ersten Abschnitt 20 entsprechend dem gewünschten
Abstand von der Drehachse 51 von der Drehachse 34 zu verschieben ist, was aufgrund der Parallelkurbelgetriebekupplungen 94 der Kuppelelemente 54 stufenlos möglich ist.
Als einziges Teil ist schliesslich der zweite Abschnitt 22
des Getriebegehäuses der unterschiedlichen Verschiebung
des dritten Abschnitts 24 relativ zum ersten Abschnitt
20 anzupassen. Dies ist jedoch ebenfalls in einfacher Weise
durch in unterschiedlichen Abständen auszuführende Bohrungen
möglich.

Somit stellt das dritte Ausführungsbeispiel ein Verzweigungsgetriebe für Doppelschneckenmaschinen dar, bei dem der Abstand der Schneckenwellen 36, 50 unter Verwendung derselben
Teile variierbar ist und dessen Getriebegehäuse 12 nur
aus zwei vollkommen unterschiedlichen Teilen, dem einstückig
ausgeführten zweiten Abschnitt 22 und den identischen Halbschalen 74, 76 besteht.

# HOEGER, STELLRECHT & PARTNER

P A T E N T A N W Ä L T E

**0179226**

UHLANDSTRASSE 14 c · D 7000 STUTTGART 1

P 34 31 547.0

A 46 240 b
20.November 1984          Anmelder: J.A. Blach
x-35                                Wilhelmstrasse 24
                                          7144 Asperg

P a t e n t a n s p r ü c h e

1. Verzweigungsgetriebe für Doppelschneckenmaschinen mit
   einer von einer Antriebswelle (28) unmittelbar angetriebenen ersten Schneckenwelle (36) und einer von der Antriebswelle (28) über Zahnräder (52, 58, 66) und mindestens
   ein Kuppelelement (54) angetriebenen zweiten Schneckenwelle (50), wobei alle Getriebeelemente (28, 36, 52, 58,
   66, 54, 50) parallel zueinander angeordnete Drehachsen
   (34, 56, 86, 88, 51) besitzen, und mit einem in Richtung
   der Drehachsen (34, 56, 86, 88, 51) durch eine erste (14)
   und eine zweite (16) senkrecht zu diesen Drehachsen
   stehende Trennebene in drei Abschnitte (20, 22, 24) unterteilten Gehäuse (10), dessen erster (20) und dritter (24)
   Abschnitt die Zahnräder (52, 58, 66) aufnehmen und mehrere
   Gehäuseteile (74, 76) aufweisen, wobei Stossflächen der
   Gehäuseteile (74, 76) mindestens eine zu den Drehachsen
   (34, 56, 86, 88, 51) parallele und durch mindestens eine
   der Drehachsen (34, 56, 86, 88, 51) hindurchverlaufende
   Trennebene (78, 80) definieren, dadurch gekennzeichnet,
   dass  der erste Abschnitt (20) und der dritte Abschnitt
   (24) mit Ausnahme ihres Bohrungsbildes identisch ausgebildet sind und jeweils eine dritte Trennebene (78) bzw.
   eine vierte Trennebene (80) besitzen, die durch die Drehachse (56, 86, 88) des Kuppelelements (54) oder die
   Drehachsen (56, 86, 88) der Kuppelelemente (54) und
   senkrecht zu einer durch die beiden Drehachsen (34, 51)
   der Schneckenwellen (36, 50) festgelegten Spiegelebene
   verläuft.

A 46 240 b
26.Juli 1984
x-35

2. Verzweigungsgetriebe nach Anspruch 1, dadurch gekennzeichnet, dass die Gehäuseteile des ersten und dritten Abschnitts identische Halbschalen (74, 76) sind.

3. Verzweigungsgetriebe nach Anspruch 1 oder 2, dadurch gekennzeichnet, dass der zweite Abschnitt (22) Axialdrucklager (46, 72) für beide Schneckenwellen (36, 50) aufnimmt.

4. Verzweigungsgetriebe nach einem der vorstehenden Ansprüche, dadurch gekennzeichnet, dass der zweite Abschnitt (22) ein einstückiges Teil ist.

5. Verzweigungsgetriebe nach einem der vorstehenden Ansprüche, dadurch gekennzeichnet, dass die dritte (78) und die vierte Trennebene (80) gegeneinander versetzt sind.

6. Verzweigungsgetriebe nach einem der vorstehenden Ansprüche, dadurch gekennzeichnet, dass das Kuppelelement (54) ein erstes, in dem ersten Abschnitt angetriebenes Wellenstück (90) und ein zweites achsparallel zum ersten, jedoch gegenüber diesem versetzt angeordnetes Wellenstück (92), zum Antrieb der zweiten Schneckenwelle (50) in dem dritten Abschnitt (24) sowie eine diese beiden Wellenstücke (90, 92) verbindende Parallelkurbelgetriebekupplung (94) umfasst, die einen stufenlosen Versatz der beiden Wellenstücke (90, 92) innerhalb eines zulässigen Bereichs erlaubt.

A 46 240 b
26.Juli 1984
x-35

7. Verzweigungsgetriebe nach einem der vorstehenden Ansprüche, dadurch gekennzeichnet, dass die Gehäuseteile Lagerungen für zwei symmetrisch zur Spindelebene angeordnete Kuppelelemente (54) aufweisen.

8. Verzweigungsgetriebe nach einem der Ansprüche 5 bis 7, dadurch gekennzeichnet, dass die Drehachsen (86, 88) der Kuppelelemente (54) und die Antriebswelle (28) oder die zweite Schneckenwelle (50) in der dritten (78) bzw. der vierten Trennebene (80) des ersten (20) bzw. dritten Abschnitts (24) liegen.

Fa. J. A. Blach, Wilhelmstraße 24, 7144 Asperg

HOEGER, STELLRECHT & PARTNER

# Fig.2

# Fig.1

Fig. 3

Fig.4

0179226

0179226

Fig.6

Fig.5

Blatt 3
Blatt

A 46 240 b

0179226

## Fig.7

44 26 60    24 58 62 16 12 22 94 14 62 20 58 60 18 84

9

88

42

36

88

48 46    38

90 86
65 28 34

30
52
90
65
86

58    94 54    58

10    92    11

## Fig.9

44 26 60 58    24 62 16 22 94 14 62 20 58 60 18 84

10    11

51 50

7

82
86

34 36    88 10    92    90    11    28

A 46 240 b

# Fig.8

# Fig.10    Fig.11